# EUROPEAN PATENT APPLICATION

(11) **EP 4 794 375 A1**
(43) Date of publication of application: **19.08.2026**
(21) Application number: 24893979.5
(22) Date of filing: 05.11.2024
(51) Int. Cl.: H04W 24/04, H04W 36/16, H04W 92/20

(54) **BASE STATION DEVICE, BASE STATION DEVICE SWITCHING METHOD, AND PROGRAM**

(30) Priority: 21.11.2023 JP 2023197677
(71) Applicant: Softbank Corp., Tokyo 105-7529 (JP)
(72) Inventor: WATANABE, Hiroki, Tokyo 105-7529 (JP); KANAYA, Tomoaki, Tokyo 105-7529 (JP); NISHINO, Hirotaka, Tokyo 105-7529 (JP); HIRAI, Ryoji, Tokyo 105-7529 (JP); HORIBA, Katsuhiro, Tokyo 105-7529 (JP)
(74) Representative: Meissner Bolte Partnerschaft mbB
(86) International application number: PCT/JP2024/039185
(87) International publication number: WO 2025/109987

(57) **Abstract**

To make it possible to provide a communication service highly resistant to a failure in a transport network. A base station device in a mobile communication network includes: a context holding section (174) configured to store a mobility management (MM) context and a session management (SM) context for each of terminals connected to the base station device; and a context forwarding section (161) configured to forward, in a case where a handover of a terminal is detected, the MM context and the SM context of the terminal to a base station device serving as a Target of the handover.

## Description

### Technical Field

The present disclosure relates to a base station device, a base station device switching method, and a program, and relates to a base station device, a base station device switching method, and a program that make it possible to provide a communication service highly resistant to a failure in a transport network.

### Background Art

With the spread of Multi-access edge computing (MEC), opportunities for a terminal (UE) to receive a provided application service on an MEC server are increasing. With use of MEC, for example, it becomes possible to reduce a response delay of the application service.

Generally, each terminal in a mobile communication system communicates with an MEC server via UPF, which is one of network functions of a core network. For this reason, for example, in a case where the UPF is disposed in a specific data center or the like, advantages of MEC cannot be utilized. Therefore, in the future, there is a high possibility that a plurality of UPFs will be each disposed in the vicinity of a base station (RAN: Radio Access Network).

Further, in an MEC architecture, a technology for providing seamless streaming even if a handover occurs has also been proposed (see, for example, Patent Literature 1). By adopting such an MEC architecture, it becomes possible to stably provide a low-latency network service.

### Citation List

### [Patent Literature]

[Patent Literature 1]
Japanese Patent Application Publication Tokukai No. 2022-51973

### Summary of Invention

### Solution to Problem

A base station device in accordance with an aspect of the present disclosure is a base station device in a mobile communication network, the base station device including: a context holding section configured to store a mobility management (MM) context and a session management (SM) context for each of terminals connected to the base station device; and a context forwarding section configured to forward, in a case where a handover of a terminal is detected, the MM context and the SM context of the terminal to a base station device serving as a Target of the handover.

A base station device switching method in accordance with an aspect of the present disclosure is a base station device switching method in a mobile communication network, the base station device switching method including: storing a mobility management (MM) context and a session management (SM) context for each of terminals connected to a base station device; and forwarding, in a case where a handover of a terminal is detected, the MM context and the SM context of the terminal to a base station device serving as a Target of the handover.

The aspects of the present disclosure may be realized by a computer. In this case, the present disclosure also includes: a program causing the computer to execute the steps of the above-described method; and a computer-readable storage medium in which the program is stored.

### Brief Description of Drawings

Fig. 1 is a view illustrating a configuration of a general 5G mobile communication system.
Fig. 2 is a block diagram illustrating a functional configuration example of a core network and a base station device in Fig. 1.
Fig. 3 is a block diagram illustrating a functional configuration example of a core network and a base station device in a 5G mobile communication system in accordance with an embodiment.
Fig. 4 is a block diagram illustrating a detailed configuration example of a U-plane processing section.
Fig. 5 is a view illustrating a process related to Registaraion among a terminal, a base station, and a core network.
Fig. 6 is another view illustrating a process related to Registaraion among the terminal, the base station, and the core network.
Fig. 7 is still another view illustrating a process related to Registaraion among the terminal, the base station, and the core network.
Fig. 8 is still another view illustrating a process related to Registaraion among the terminal, the base station, and the core network.
Fig. 9 is a view illustrating a process related to PDU Session Establishment among the terminal, the base station, and the core network.
Fig. 10 is a view illustrating a process related to PDU Session Establishment among the terminal, the base station, and the core network.
Fig. 11 is a view illustrating communication between a UE and a DN in a case where a failure occurs in a transport network.
Fig. 12 is a view illustrating a handover of a UE 200 carried out between two RANs.
Fig. 13 is an arrow chart illustrating a sequence of Registaration.
Fig. 14 is an arrow chart illustrating a sequence of PDU Session Establishment.
Fig. 15 is an arrow chart illustrating a sequence of Xn Handover.
Fig. 16 is a view illustrating a configuration example of a computer that executes instructions of a program that is software for realizing each function.

### Description of Embodiments

With the spread of Multi-access edge computing (MEC), opportunities for a terminal (UE) to receive a provided application service on an MEC server are increasing. With use of MEC, for example, it becomes possible to reduce a response delay of the application service.

Generally, each terminal in a mobile communication system communicates with an MEC server via UPF, which is one of network functions of a core network. For this reason, for example, in a case where the UPF is disposed in a specific data center or the like, advantages of MEC cannot be utilized. Therefore, in the future, there is a high possibility that a plurality of UPFs will be each disposed in the vicinity of a base station (RAN: Radio Access Network).

On the other hand, current mobile communication systems are vulnerable to disconnection between RAN and a core network due to, for example, a failure in a transport network. For example, when communication of C-plane (N2 interface, SCTP, etc.) is disconnected between the RAN and the core network, the RAN stops a cell.

In such a situation, for example, if a failure occurs in a transport network connecting the RAN and a data center in which a server or the like corresponding to each network function of the core network is disposed, a terminal accommodated in a cell of the RAN becomes unable to communicate. In such a case, for example, even if communication between the RAN and the UPF is possible, the UE cannot receive the provided application service.

It is an object of an aspect of the present disclosure to achieve a technology that makes it possible to provide a communication service highly resistant to a failure in a transport network.

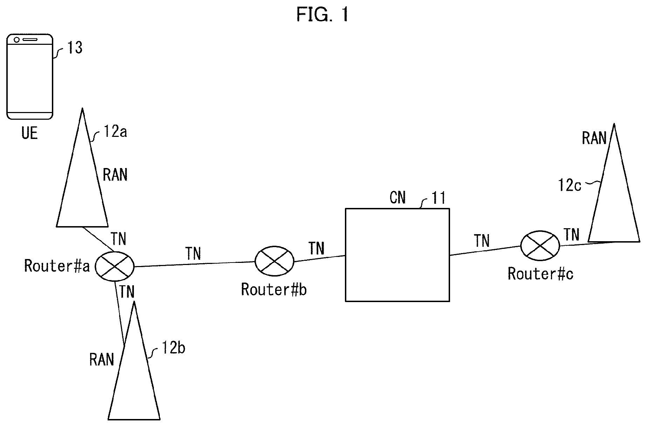

The following description will discuss embodiments of the present disclosure with reference to the drawings. Fig. 1 is a view illustrating a configuration of a general 5G mobile communication system.

In the example of Fig. 1, RAN 12a which is a base station that carries out wireless communication with a terminal (UE: User Equipment) 13 in a cell is illustrated. Further, similar RAN 12b and RAN 12c are illustrated, and each base station is connected to a core network (CN) 11.

Also, in the drawing, routers are indicated by oval symbols. The RAN 12a and the RAN 12b are connected to a Router #a, and are connected to the core network 11 via a Router #b. The RAN 12c is connected to the core network 11 via a Router #c. The communication path connecting the base station and the core network 11 is referred to as a backhaul or a transport network (TN).

### (Functional configuration of core network and base station device)

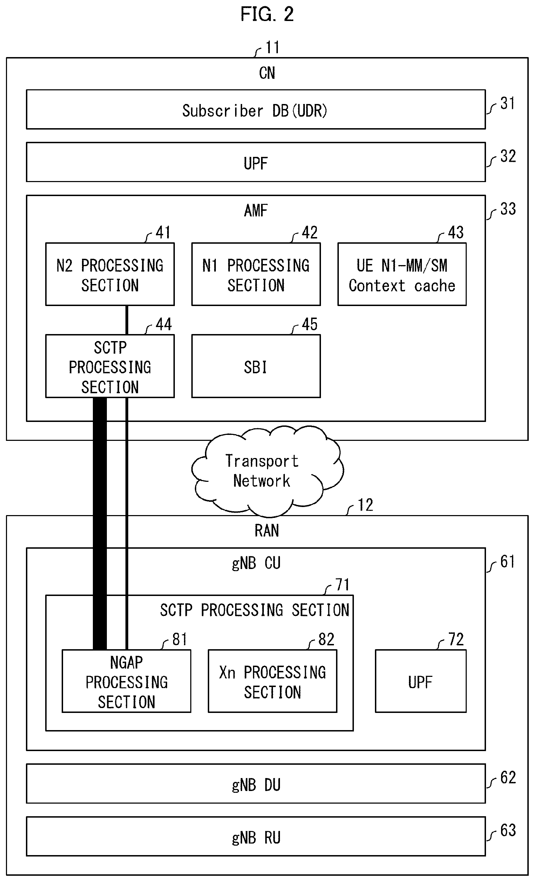

Fig. 2 is a block diagram illustrating a functional configuration example of the core network (CN) 11 and the base station device (RAN) 12 in Fig. 1. Here, configurations of the RAN 12a, the RAN 12b, and the RAN 12c are collectively shown as a configuration of the RAN 12.

In the example of Fig. 2, the core network 11 is configured to include Subscriber DB (UDR: User Data Repository) 31, User Plane Function (UPF) 32, and Access and Mobility Management Function (AMF) 33.

The UDR 31 is a functional block that mainly, for example, stores and reads subscriber data and stores and reads a session policy. The UPF 32 is a functional block that mainly carries out, for example, session anchor, mobility anchor, packet forwarding, and access control. The AMF 33 is a functional block that mainly carries out termination of the N2 interface, termination of the N1 interface, Registration management, and mobility management.

Note that the actual core network 11 includes other network functions such as a session management function (SMF), a unified data management (UDM), and a policy control function (PCF) in addition to the UDR 31, the UPF 32, and the AMF 33. In Fig. 2, illustration of the other network functions is omitted.

Further, in the example of Fig. 2, the base station device 12 is configured to include a gNB central unit (CU) 61, a gNB distributed unit (DU) 62, and a gNB radio unit (RU) 63. Note that "gNB" means a gNodeB (base station) in a 5G mobile communication network. Hereinafter, the gNB CU 61, the gNB DU 62, and the gNB RU 63 will be referred to as "CU 61", "DU 62", and "RU 63", respectively as appropriate.

The RU 63 is a functional block that controls an antenna to carry out communication via radio waves with a terminal, and also carries out, for example, control such as MIMO and beamforming. The DU 62 is a functional block that, for example, modulates and demodulates signals, and controls communication of a MAC layer. The CU 61 is a functional block that carries out, for example, a process of Packet Data Convergence Protocol (PDCP) for carrying out control of the DU 62 and the RU 63, connection with the core network, encryption of packets, and the like, and a process of Radio Resource Control (RRC) for carrying out radio resource management of the terminal, and the like.

Further, in the example of Fig. 2, the AMF 33 includes an N2 processing section 41, an N1 processing section 42, a UE N1-MM/SM Context cache 43, an SCTP processing section 44, and a service based interface (SBI) 45.

The N2 processing section 41 is a functional block that carries out control or management related to termination of the N2 interface, which is a connection interface between the RAN and the AMF, and communication of the N2 interface (for example, transmission and reception of an NGAP message).

The N1 processing section 42 is a functional block that carries out control or management related to termination of the N1 interface, which is an interface between the UE and the AMF, and communication of the N1 interface (for example, transmission and reception of a NAS message). Further, the N1 processing section 42 executes processes related to, for example, generation and update of a Mobility Management Context, which is mobility management information transmitted and received as a NAS message, and a Session Management Context, which is session management information transmitted and received as a NAS message.

The UE N1-MM/SM Context cache 43 is a cache memory that stores the Mobility Management Context and the Session Management Context that are transmitted and received as NAS messages.

The SCTP processing section 44 is a functional block that carries out termination and management of a Stream Control Transmission Protocol (SCTP) session in communication between the core network 11 and the base station device 12.

The SBI 45 is an interface for calling various network functions in the core network connected by a service-based architecture.

Further, in the example of Fig. 2, the CU 61 includes an SCTP processing section 71 and UPF 72. The SCTP processing section 71 is a functional block that carries out termination and management of an SCTP session in communication between the core network 11 and the base station device 12. The UPF 72 is a functional block configured by implementing functions related to the UPF of the core network 11 in the base station device 12.

In the example of Fig. 2, for example, taking into account a case where the terminal receives a provided application service on an MEC server, the UPF 72 is included in the base station device 12. The terminal authenticated by the core network can thereafter receive the application service provided from, for example, an MEC server located outside the core network 11 via the UPF 72 included in the CU 61 of the base station device 12 without the intervening transport network. By doing so, it becomes possible to provide a communication service with lower latency compared to a case with an intervening transport network.

The SCTP processing section 71 includes an NGAP processing section 81 and an Xn processing section 82. The NGAP processing section 81 is a functional block that carries out, for example, processes such as generation, encryption, and decryption of an NGAP message. The Xn processing section is a functional block that carries out control or management related to communication of an Xn interface, which is an interface connecting base station devices 12 to each other.

For example, when a failure occurs in the transport network, the SCTP session between the SCTP processing section 44 and the SCTP processing section 71 is disconnected, and it becomes impossible to transmit and receive an NGAP message between the N2 processing section 41 and the NGAP processing section 81. In this case, the base station device 12 stops transmission of radio waves related to its own cell, and the terminal 13 that has been accommodated in the cell until then enters a state of being connected to neither the core network 11 nor the base station device 12.

On the other hand, the CU 61 of the base station includes the UPF 72, and the terminal 13 already authenticated by the core network 11 should be thereafter able to receive the application service provided from, for example, the MEC server, via the UPF 72 of the base station device 12 without the intervening transport network. However, actually, current base station software executes a process of causing the base station device 12 to stop transmission of radio waves related to its own cell when a failure occurs in the transport network and the SCTP association is disconnected. Therefore, even if no failure occurs in the base station device 12 itself, the terminal 13 becomes unable to receive the provided application service.

In order to avoid such a situation, it is not sufficient to simply avoid stopping transmission of radio waves related to the cell, and it is necessary to continue communication normally even in a case where, for example, a handover occurs.

That is, the conventional mobile communication network has attempted to provide a low-latency communication service by, for example, implementing the function of the UPF in the base station device, but has a problem of low tolerance to a failure in the transport network.

### <Embodiment 1>

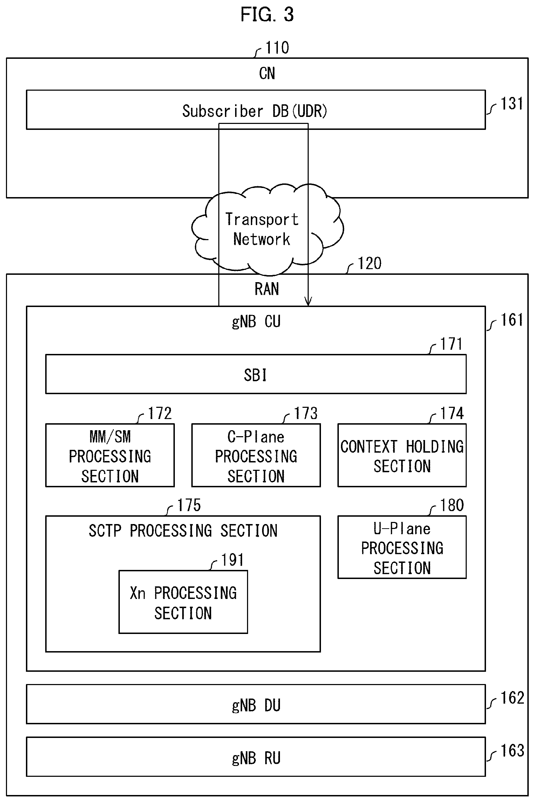

Fig. 3 is a block diagram illustrating a functional configuration example of a core network (CN) 110 and a base station device (RAN) 120 in a 5G mobile communication system in accordance with the present embodiment.

### (Functional configuration of core network)

The core network 110 illustrated in the drawing includes a Subscriber DB (UDR) 131. The network functions other than the UDR 131, such as UPF and AMF, may or may not be included in the core network 110.

### (Functional configuration of RAN)

The base station device 120 in Fig. 3 is configured to include a gNB Central Unit (CU) 161, a gNB Distributed Unit (DU) 162, and a gNB Radio Unit (RU) 163. Note that hereinafter, the base station device 120 will be referred to as RAN 120 as appropriate, and the gNB CU 161, the gNB DU 162, and the gNB RU 163 will be referred to as CU 161, DU 162, and RU 163 hereinafter, respectively as appropriate.

### (Central Unit (CU))

The CU 161 is a functional block that carries out a process of Packet Data Convergence Protocol (PDCP) for carrying out control of the DU 162 and the RU 163 described later, connection with the core network, encryption of packets, and the like, and a process of Radio Resource Control (RRC) for carrying out radio resource management of the terminal, and the like. As an example, the functions of the CU 161 are realized by software such as a program executed by a computer.

In the example of Fig. 3, the CU 161 includes an SBI 171, an MM/SM processing section 172, a C-plane processing section 173, a context holding section 174, an SCTP processing section 175, and a U-Plane processing section 180.

As an example, the SBI 171, the MM/SM processing section 172, the C-plane processing section 173, the context holding section 174, the SCTP processing section 175, and the U-Plane processing section 180 may be configured as instances generated by calling functions in software that executes processes corresponding to the functions of the CU 161.

As will be described later, the functional blocks included in the CU 161 execute various processes corresponding to the AMF, the SMF, the UPF, and the like. That is, in the present embodiment, the base station device 120 executes processes that are conventionally executed by the network functions included in the core network of a 5G mobile communication system, such as the AMF, the SMF, and the UPF.

### (SBI)

The SBI 171 is a functional block similar to the SBI 45 in Fig. 2, and is an interface for receiving services provided from various network functions connected by the service-based architecture. In the example of Fig. 3, the SBI 171 is connected to the UDR 131 of the core network 110 by the service-based architecture.

### (MM/SM processing section)

The MM/SM processing section 172 is a functional block that executes a process similar to the process executed by the N1 processing section 42 in Fig. 2. That is, the MM/SM processing section 172 carries out control or management related to termination of the N1 interface and communication of the N1 interface (for example, transmission and reception of a NAS message). Further, the MM/SM processing section 172 executes processes related to, for example, generation and update of a Mobility Management Context, which is mobility management information transmitted and received as a NAS message, and a Session Management Context, which is session management information transmitted and received as a NAS message.

The MM/SM processing section 172 executes processes that are conventionally executed by the network functions included in a 5G mobile communication system, such as the AMF, the SMF, and the like, on behalf of the AMF, the SMF, and the like.

Note that the MM/SM processing section 172 may be an instance generated by calling a function for causing a computer to execute the above-described process. Alternatively, the MM/SM processing section 172 may be a part of a computation process executed in software that realizes the functions of the CU 161.

### (C-plane processing section)

The C-plane processing section 173 is a functional block that executes, for example, a process related to procedures such as Registration and PDU session Establishment of the UE. As an example, the C-plane processing section 173 executes processes such as decryption of a subscription concealed identifier (SUCI) and generation of an Authentication Request message in executing Registration. Further, the C-plane processing section 173 executes processes such as decryption of a PDU Session Establishment Request message and allocation of an IP address in executing PDU session Establishment.

The C-plane processing section 173 executes processes that are conventionally executed by the network functions included in a 5G mobile communication system, such as UDM, PCF, and the like, on behalf of the UDM, the PCF, and the like.

Note that the C-plane processing section 173 may be an instance generated by calling a function for causing a computer to execute the above-described process. Alternatively, the C-plane processing section 173 may be a part of a process executed in the software that realizes the functions of the CU 161.

### (Context holding section)

The context holding section 174 is a functional block similar to the UE N1-MM/SM Context cache 43 in Fig. 2. That is, the context holding section 174 is a cache memory that stores the Mobility Management Context and the Session Management Context that are transmitted and received as NAS messages.

### (SCTP processing section)

The SCTP processing section 175 is a functional block corresponding to the SCTP processing section 71 in Fig. 2. An Xn processing section 191 is a functional block that executes a process similar to that of the Xn processing section 82 in Fig. 2. Unlike the SCTP processing section 71 in Fig. 2, the SCTP processing section 175 in Fig. 3 is not provided with a functional block corresponding to the NGAP processing section 81. That is, in the 5G mobile communication system in accordance with the present embodiment, it is not necessary to carry out communication by the N2 interface, i.e., communication between the RAN 120 and the AMF of the core network 110.

### (U-plane processing section)

The U-plane processing section 180 is a functional block that executes various processes related to data communication related to the application service of the UE and the like, and may be, for example, a functional block that executes a process similar to that of the UPF 72 in Fig. 2. Note that the U-plane processing section 180 may be an instance generated by calling a function for causing a computer to execute a process similar to that of the UPF 72 in Fig. 2. Alternatively, the U-plane processing section 180 may be a part of a process executed in the software that realizes the functions of the CU 161.

### (Distributed unit (DU) and Radio unit (RU))

The DU 162 and the RU 163 are functional blocks similar to the DU 62 and the RU 63 in Fig. 2, respectively. That is, the RU 163 is a functional block that controls an antenna to carry out communication via radio waves with a terminal, and also carries out, for example, control such as MIMO and beamforming. The DU 162 is a functional block that, for example, modulates and demodulates signals, and controls communication of a MAC layer.

In the example of Fig. 3, only the UDR 131 is illustrated in the core network 110, but other network functions may be included in the core network 110.

### (Detailed configuration of U-plane processing section)

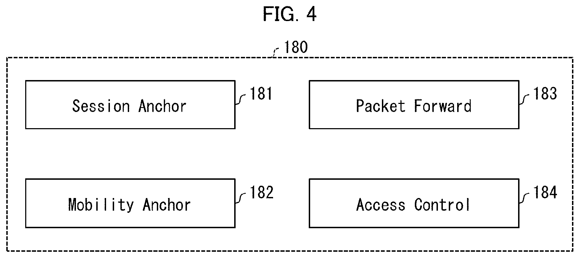

Fig. 4 is a block diagram illustrating a detailed configuration example of the U-plane processing section 180 in Fig. 3. In this example, the U-plane processing section 180 includes Session Anchor 181, Mobility Anchor 182, Packet Forward 183, and Access Control 184.

The Session Anchor 181 and the Mobility Anchor 182 are functional blocks that terminate a PDU session. The Packet Forward 182 is a functional block that executes a process related to forwarding of a U-plane packet. The Access Control 184 is a functional block that carries out control related to a session rule described later.

### (Registaraion)

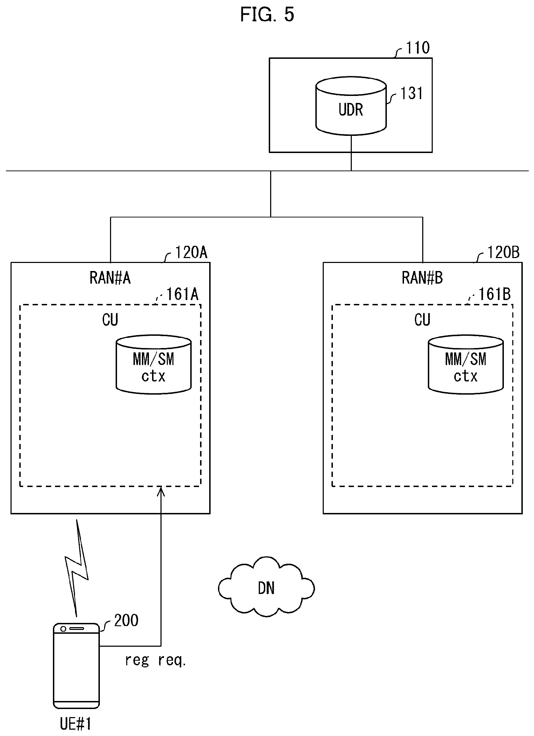

Next, Registaraion in the 5G mobile communication system in accordance with the present embodiment will be described. Figs. 5 to 8 are views illustrating a process related to Registaraion among a terminal, a base station, and a core network. Figs. 5 to 8 illustrate two base stations, RAN 120A (described as RAN #A in the drawings) and RAN 120B (described as RAN #B in the drawings). Both the RAN #A and RAN #B have the functional configuration described above with reference to Fig. 3.

As illustrated in Fig. 5, a Registaraion Request message ("reg.req" in the drawing) is transmitted from the UE 200 (described as UE #1 in the drawing), which is a terminal connected to the RAN 120A, to the RAN 120A. The CU 161A of the RAN #A acquires a subscription concealed identifier (SUCI) included in the Registaraion Request message.

Such a process has been conventionally executed by the AMF in a 5G mobile communication system, but is executed by the CU 161A of the RAN 120A in the 5G mobile communication system in accordance with the present embodiment.

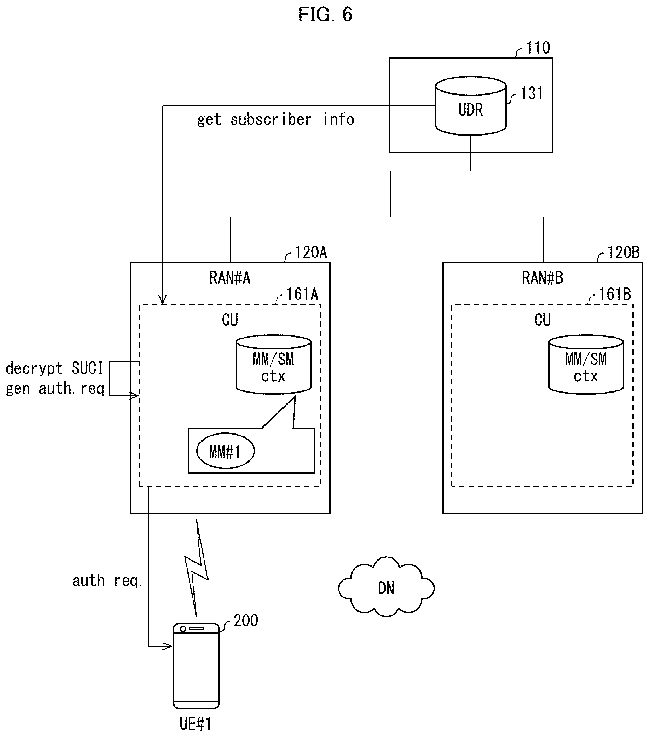

Then, as illustrated in Fig. 6, the CU 161A decrypts the SUCI ("decrypt SUCI" in the drawing) and queries the UDR 131 to acquire subscriber information ("get subscriber info" in the drawing). The CU 161A determines whether or not a user of the UE 200 is a registered subscriber on the basis of the acquired subscriber information, and transmits an Authentication Reqest message ("auth req" in the drawing) to the UE 200 in a case where it is determined that the user is a registered subscriber. At this time, a Mobility Management context (MM #1 in the drawing) is held in the context holding section (described as MM/SM Ctx in the drawing) 174A of the CU 161A.

Note that the Mobility Management context is generated and held for each UE that has transmitted the Registaraion Request message. In the present embodiment, "#1" is used as a suffix indicating that it relates to the UE #1. In this case, since the Registaraion Request message has been transmitted from the UE #1, the MM #1 is held in the context holding section.

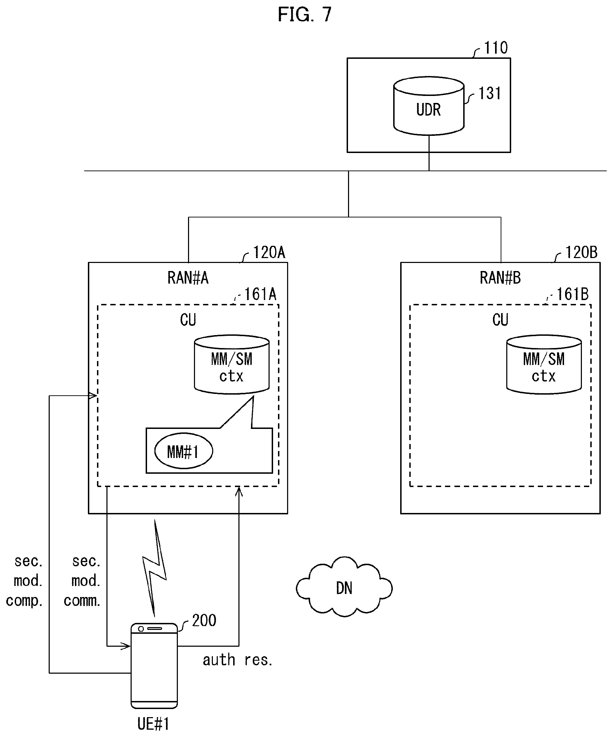

Further, as illustrated in Fig. 7, the UE 200 transmits an Authentication Response message ("auth res" in the drawing) to the RAN 120A. The CU 161A that has received the Authentication Response message generates a key for encrypting a signal path used in communication with the UE 200, and adds information on the key to the MM #1.

The CU 161A transmits a Security Mode Command message ("sec.mod.comm." in the drawing) including information related to generation of the key to the UE 200. The UE 200 generates a key for encrypting the signal path on the basis of the received Security Mode Command message, and transmits a Security Mode Complete message ("sec.mod.comp." in the drawing) to the CU 161A.

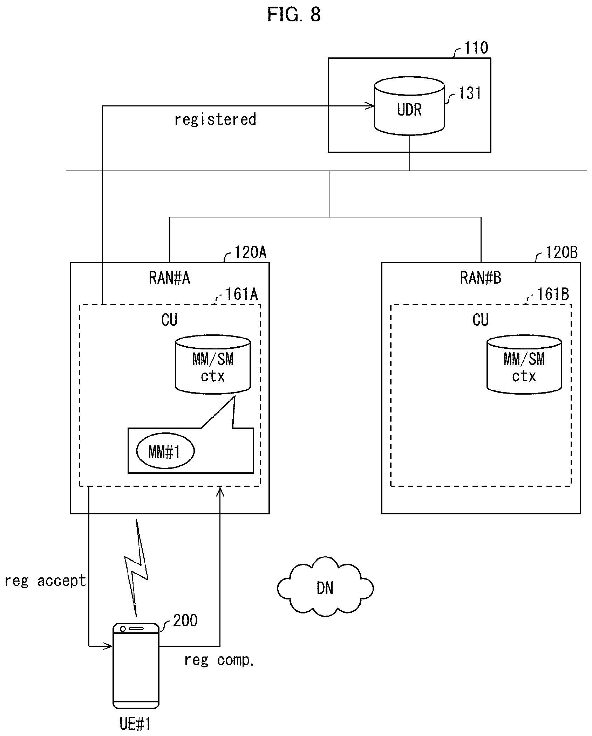

Thereafter, the CU 161A of the RAN 120A updates information stored in the UDR 131 of the core network 110, as illustrated in Fig. 8. That is, information indicating a state of the UE #1 and stored in the UDR 131 is updated so as to be in a state where authentication by the network is completed ("registered" in the drawing).

Then, the CU 161A of the RAN 120A transmits a Registration Accept message ("reg.accept" in the drawing) to the UE 200. The UE 200 that has received the Registration Accept message transmits a Registration Complete message ("reg.comp." in the drawing) to the RAN 120A. Thus, Registaraion related to the UE #1 is completed.

In this way, the RAN 120A is connected to the core network via the transport network, has the service based interface (SBI) 171 in the central unit (CU) 161, and in a case where the RAN 120A receives the Registration Request message from the UE 200, the RAN 120A receives, via the SBI 171, a service provided from the user data repository (UDR) 131 of the core network 110, and the context holding section 174 stores the MM context of the UE 200.

### (PDU Session Establishment)

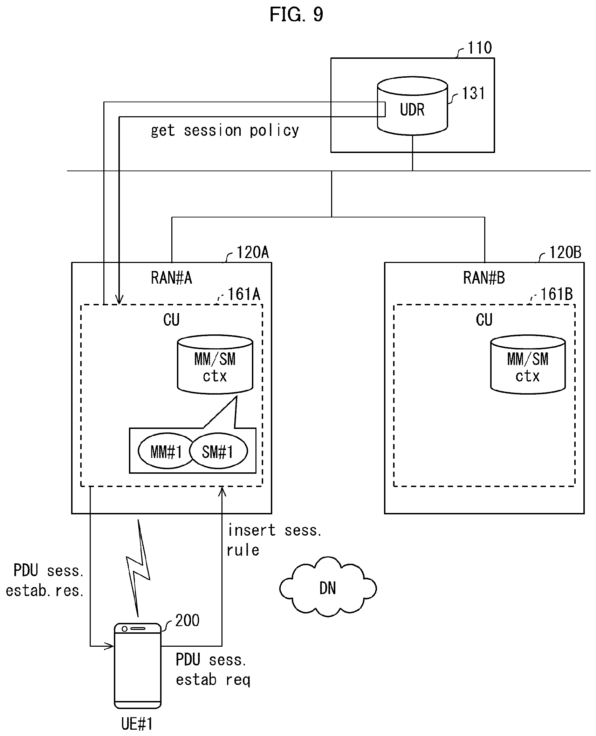

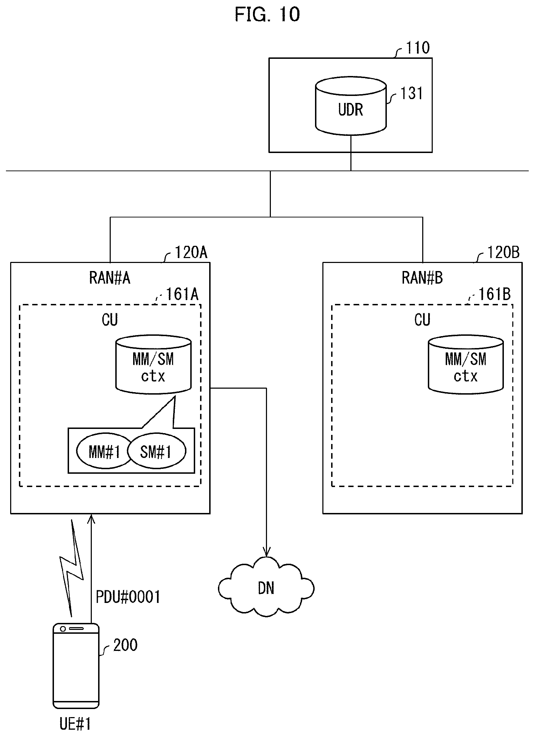

Next, PDU Session Establishment in the 5G mobile communication system in accordance with the present embodiment will be described. Figs. 9 and 10 are views illustrating a process related to PDU Session Establishment among the terminal, the base station, and the core network. Figs. 9 and 10 illustrate two base stations: the RAN 120A and the RAN 120B.

As illustrated in Fig. 9, a PDU Session Establishment Request message ("PDU sess.estab.req" in the drawing) is transmitted from the UE 200 for which Registaraion has been completed, to the RAN 120A. The PDU Session Establishment Request message includes an MM/SM message, and the CU 161A of the RAN #A refers to a session management (SM) message of the MM/SM message and acquires a session policy of the UE #1 from the UDR 131 ("get session policy" in the drawing).

Such a process has been conventionally executed by the SMF in a 5G mobile communication system, but is executed by the CU 161A of the RAN 120A in the 5G mobile communication system in accordance with the present embodiment.

The CU 161A that has acquired the session policy of the UE #1 generates a session rule of the UE #1 on the basis of the session policy with use of the U-plane processing section ("insert sess.rule" in the drawing). Thereby, U-plane data of the UE #1 is transmitted on the basis of this session rule. At this time, the Session Management context (SM #1 in the drawing) is held in the context holding section of the CU 161A, and a PDU session (for example, PDU #001) for the UE #1 is established.

In this way, in a case where the RAN 120A receives the PDU session establishment request message from the UE 200, the RAN 120A receives, via the SBI 171, a service provided from the UDR of the core network, and the context holding section 174 stores the SM context of the UE 200.

Thereafter, as illustrated in Fig. 10, the UE 200 can transmit and receive data to and from a data netwaork (DN) with use of PDU #001. That is, the UE 200 can receive the provided application service via, for example, a server on the

### DN.

As described above, since the CU 161A of the RAN 120A includes the U-plane processing section 180 described above with reference to Figs. 3 and 4, the UE 200 can transmit and receive data to and from the DN without the intervening core network 110. Note that it is assumed that the RAN 120A is connected to, for example, an MEC server, an Internet eXchange, and a satellite communication system. That is, it is assumed that the RAN 120A having the U-plane processing section 180 is connected to a connection interface with the DN.

In this way, the CU 161A executes a process corresponding to the process executed by the User plane function (UPF), which is a network function of the core network, and the RAN 120A is connected to a connection interface with the data netwaork (DN).

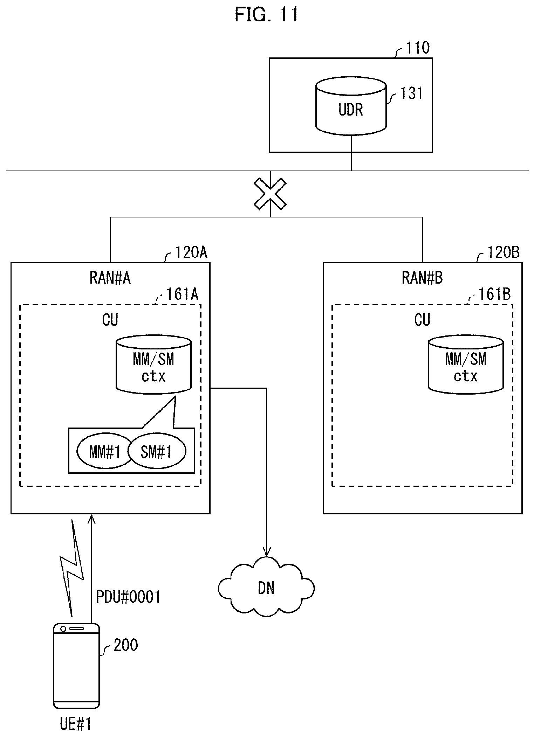

Thus, for example, as illustrated in Fig. 11, even in a case where a failure occurs in the transport network, the UE 200 can continue to transmit and receive data to and from the DN. In the example of Fig. 11, the symbol "X" in the drawing indicates that a failure has occurred in the transport network to which the RAN 120A and the RAN 120B are connected. In this way, in the 5G mobile communication system in accordance with the present embodiment, even in a case where communication between the RAN and the core network is disconnected due to a failure in the transport network, the UE for which Registaraion has already been completed can continue to receive the provided application service.

### (Handover)

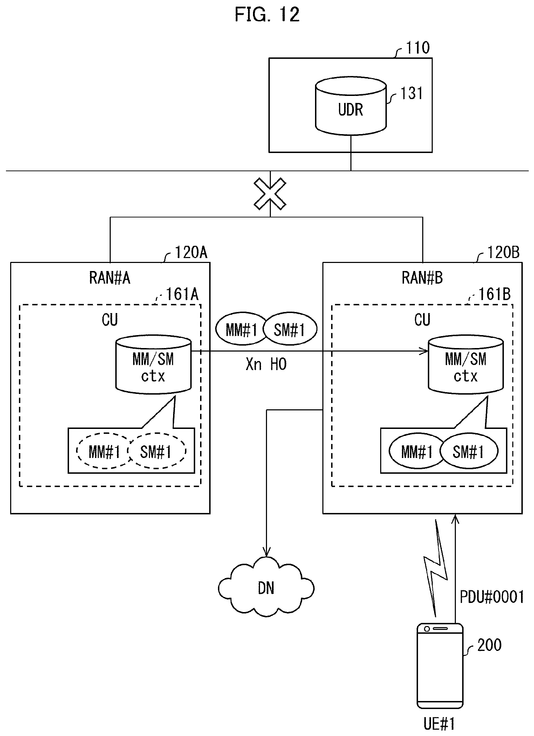

Next, a handover in the 5G mobile communication system in accordance with the present embodiment will be described. Fig. 12 is a view illustrating a handover of the UE 200 carried out between the RAN 120A and the RAN 120B.

As illustrated in the drawing, it is assumed that a connection destination of the UE 200 is switched from the RAN #A to the RAN #B due to movement of the UE 200. In this case, Xn handover is carried out between the RAN #A and the RAN #B. Note that the RAN #A from which the connection is switched is referred to as a Source base station device, and the RAN #B to which the connection is switched is referred to as a Target base station device.

As described above, in the 5G mobile communication system in accordance with the present embodiment, the context holding section is provided in the CU of the base station device, and in this case, the Mobility Management context (MM #1) and the Session Management context (SM #1) of the UE #1 are held in the context holding section 174A of the CU 161A of the RAN 120A.

For this reason, at the time of the Xn handover of the UE #1 from the RAN #A to the RAN #B, it is necessary to transmit the MM #1 and SM #1 from the RAN #A to the RAN #B. The transmission and reception of the MM #1 and SM #1 between the RAN #A and the RAN #B are carried out with use of the Xn interface. That is, contexts such as the MM #1 and SM #1 are transmitted and received between the RAN 120A and the RAN 120B without the intervening core network 110.

Since the RAN 120B has a similar configuration to that of the RAN 120A, the context transmitted from the RAN 120A is held in the context holding section 174B of the CU 161B of the RAN 120B. The MM #1 and SM #1, which are the contexts of the UE #1 held in the context holding section 174A of the RAN 120A, are invalidated (described as "expired" in the drawing).

The RAN #B uses the ongoing PDU #0001, which is the PDU session established for the UE #1, and provides a communication path between the UE #1 and the DN. That is, on the basis of the SM #1 transmitted from the RAN #A, data related to U-Plane communication of the UE #1 is transmitted with use of PDU #0001, and the data is transmitted on the basis of the session rule.

In this way, the base station device 120A in accordance with the present embodiment stores the Mobility management (MM) context and the Session management (SM) context for each terminal connected to the base station device 120, and when detecting a handover of a terminal (for example, the UE 200), forwards the MM context and the SM context of the UE 200 to the base station device 120B serving as a Target of the handover.

Thereby, for example, as illustrated in Fig. 12, even in a case where a failure occurs in the transport network, the handover can be carried out. In the example of Fig. 12, the symbol "X" in the drawing indicates that a failure has occurred in the transport network connecting the RAN 120A and the RAN 120B to the core network 110. Further, the UE 200 can continue to transmit and receive data to and from the DN in the base station (RAN #B) to which the connection is switched.

In this way, in the 5G mobile communication system in accordance with the present embodiment, even in a case where communication between the RAN and the core network is disconnected due to a failure in the transport network, the UE for which Registaraion has already been completed can continue to receive the provided application service. At this time, even if a handover occurs due to, for example, movement of the UE, the UE can continue to receive the provided application service.

### (Sequence of Registaration)

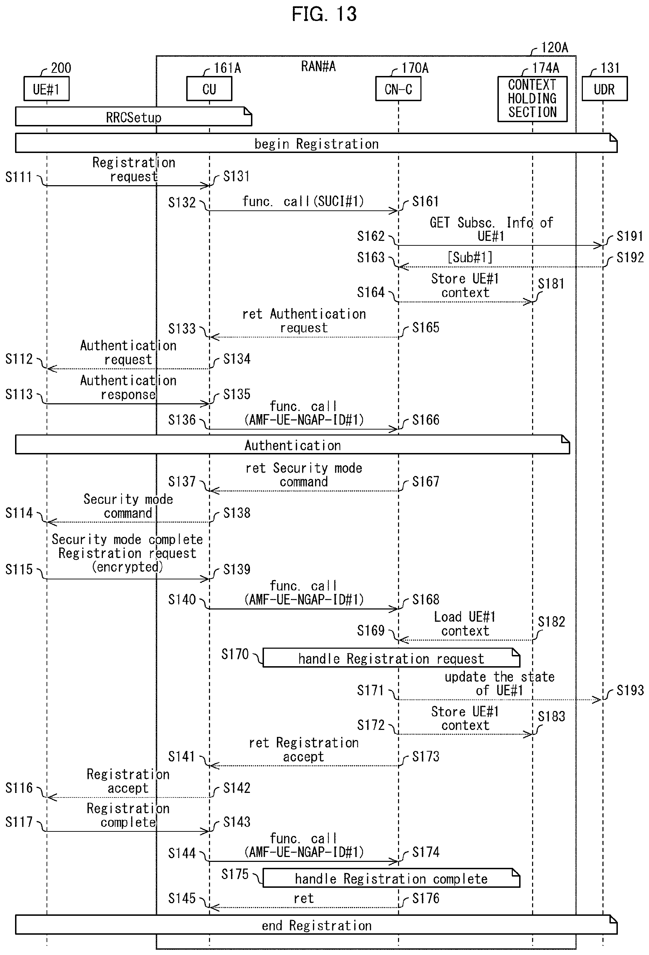

Next, a sequence of Registaration, which is one of system procedures executed in the 5G mobile communication system in accordance with the present embodiment, will be described. Fig. 13 is an arrow chart illustrating the sequence of Registaration.

In this arrow chart, the UE 200 (UE #1), the CU 161A, the CN-C 170A, the context holding section 174A, and the UDR 131 are illustrated as entities that execute each step. The CU 161A, the CN-C 170A, and the context holding section 174A are included in the RAN 120A. The CN-C 170A is an entity corresponding to the MM/SM processing section 172 and the C-plane processing section 173 described above with reference to Fig. 3, and may be, for example, an instance generated by call of a predetermined function by the CU 161A.

Note that actually, various messages transmitted from the UE 200 are acquired by the CU 161A via the DU 162A of the RAN 120A. Similarly, various messages transmitted from the CU 161A to the RAN 120A are transmitted via the DU 162A, actually. Here, description of the process executed by the DU 162 is omitted to simplify the description.

In the drawing, first, a system procedure referred to as RRCSetup is executed between the UE 200 and the RAN 120A. Thereafter, Registaration is actually initiated ("begin Registaration").

In step S111, the UE 200 transmits a Registration Request message to the RAN 120A, and in step S131, this is received by the CU 161A of the RAN 120A.

In step S132, the CU 161A calls a function for executing various processes related to the MM/SM processing section 172 and the C-plane processing section 173. Here, a function call (func.call) is executed by using SUCI #1 as an argument, and in step S161, for example, the CN-C 170A as an instance corresponding to the MM/SM processing section 172 and the C-plane processing section 173 is generated.

In step S162, the CN-C 170A executes an HTTP method "GET Subsc.Info of UE #1". Thereby, in step S191, the UDR 131 retrieves subscriber information of the UE #1.

In step S192, the UDR 131 provides the subscriber information (Sub #1) of the UE #1 to the CN-C 170, and in step S163, this is acquired by the CN-C 170A.

In step S164, the CN-C 170A executes "Store UE #1 context" with use of a protocol specified by the context holding section 174A. Thereby, in step S181, the Mobility Management context of the UE #1 is held in the context holding section 174A.

In step S165, the CN-C 170A generates "Authentication Request" as a return value in response to the function call in step S132, and in step S133, this is acquired by the CU 161A.

In step S134, the CU 161A transmits an Authentication Request message to the UE 200, and in step S112, this is received by the UE 200.

In step S113, the UE 200 transmits an Authentication Response message to the RAN 120A, and in step S135, this is received by the CU 161A.

In step S136, the CU 161A calls a function for executing various processes related to the MM/SM processing section 172 and the C-plane processing section 173. Here, a function call (func.call) is executed by using AMF-UE-NGAP-ID #1 as an argument, and in step S166, for example, the CN-C 170A as an instance corresponding to the MM/SM processing section 172 and the C-plane processing section 173 is generated. Thereafter, a system procedure referred to as Authentication is executed, and authentication of the UE #1 is executed.

In step S167, the CN-C 170A generates "Security mode command" as a return value in response to the function call in step S136, and in step S137, this is acquired by the CU 161A.

In step S138, the CU 161A transmits a Security mode command message to the UE 200, and in step S114, this is received by the UE 200.

In step S115, the UE 200 transmits a Security mode complete message to the RAN 120A, and in step S139, this is received by the CU 161A.

In step S140, the CU 161A calls a function for executing various processes related to the MM/SM processing section 172 and the C-plane processing section 173. Here, a function call (func.call) is executed by using AMF-UE-NGAP-ID #1 as an argument, and in step S168, for example, the CN-C 170A as an instance corresponding to the MM/SM processing section 172 and the C-plane processing section 173 is generated.

In step S182, the context holding section 174A executes "Load UE #1 context" with use of a specified protocol. Thereby, in step S169, the context related to the UE #1 held by the context holding section 174 is read by the CN-C 170A.

In step S170, the CN-C 170A executes a handle Registaraion request process. Thereby, location information of the UE # is acquired.

In step S171, the CN-C 170A executes "Update the state of the UE #1" with use of a protocol specified by the context holding section 174A. Thereby, in step S193, the subscriber information of the UE #1 is updated in the UDR 131.

Further, in step S172, the CN-C 170A executes "Store UE #1 context" with use of a protocol specified by the context holding section 174A. Thereby, the Mobility Management context of the UE #1 updated in step S183 is held by the context holding section 174A.

In step S173, the CN-C 170A generates "Registration Accept" as a return value in response to the function call in step S140, and in step S141, this is acquired by the CU 161A.

In step S142, the CU 161A transmits a Registration Accept message to the UE 200, and in step S116, this is received by the UE 200.

In step S117, the UE 200 transmits a Registration complete message to the RAN 120A, and in step S143, this is received by the CU 161A.

In step S144, the CU 161A calls a function for executing various processes related to the MM/SM processing section 172 and the C-plane processing section 173. Here, a function call (func.call) is executed by using AMF-UE-NGAP-ID #1 as an argument, and in step S174, for example, the CN-C 170A as an instance corresponding to the MM/SM processing section 172 and the C-plane processing section 173 is generated.

In step S175, the CN-C 170A executes a handle Registaraion complete process. Thereby, for example, a predetermined timer used in registration of the UE #1 is stopped.

In step S176, the CN-C 170A generates a return value in response to the function call in step S144, and in step S145, this is acquired by the CU 161A. Note that in this case, for example, the return value may be Null.

Then, Registaration is ended ("end Registaration").

In the 5G mobile communication system in accordance with the present embodiment, Registaration as a system procedure is executed in this way.

### (Sequence of PDU Session Establishment)

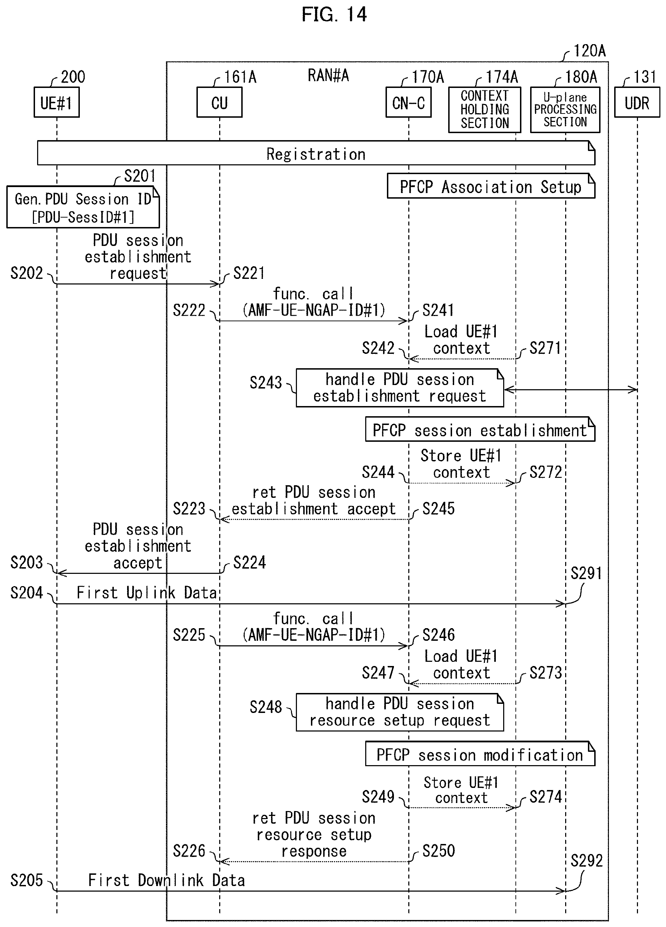

Next, a sequence of PDU Session Establishment, which is one of system procedures executed in the 5G mobile communication system in accordance with the present embodiment, will be described. Fig. 14 is an arrow chart illustrating the sequence of PDU Session Establishment.

In this arrow chart, the UE 200 (UE #1), the CU 161A, the CN-C 170A, the context holding section 174A, the U-Plane processing section 180A, and the UDR 131 are illustrated as entities that execute each step. The CU 161A, the CN-C 170A, the context holding section 174A, and the U-Plane processing section 180A are included in the RAN 120A.

The CN-C 170A is an entity corresponding to the MM/SM processing section 172 and the C-plane processing section 173 described above with reference to Fig. 3, and may be, for example, an instance generated by call of a predetermined function by the CU 161A. Further, the U-Plane processing section 180A is an entity corresponding to the U-Plane processing section 180 described above with reference to Fig. 3, and may be, for example, an instance generated by call of a predetermined function by the CU 161A.

Note that actually, various messages transmitted from the UE 200 are acquired by the CU 161A via the DU 162A of the RAN 120A. Similarly, various messages transmitted from the CU 161A to the RAN 120A are transmitted via the DU 162A, actually. Here, description of the process executed by the DU 162 is omitted to simplify the description.

Before PDU Session Establishment is executed, Registaration described above with reference to Fig. 13 is executed. After Registaration has been completed, a system procedure referred to as Packet Forwarding Control Protocol (PFCP) Association Setup is executed, and after PFCP Association Setup has been completed, a process of step S201 is executed.

In step S201, the UE 200 executes a Gen.PDU Session ID process. Thereby, an ID (for example, ID #1) of a PDU Session used by the UE 200 itself is generated.

In step S202, the UE 200 transmits a PDU session establishment request message to the RAN 120A, and in step S221, this is received by the CU 161A of the RAN 120A.

In step S222, the CU 161A calls a function for executing various processes related to the MM/SM processing section 172 and the C-plane processing section 173. Here, a function call (func.call) is executed by using AMF-UE-NGAP-ID #1 as an argument, and in step S241, for example, the CN-C 170A as an instance corresponding to the MM/SM processing section 172 and the C-plane processing section 173 is generated.

In step S271, the context holding section 174A executes "Load UE #1 context" with use of a specified protocol. Thereby, in step S242, the context related to the UE #1 held by the context holding section 174A is read by the CN-C 170A.

In step S243, the CN-C 170A executes a handle PDU session establishment request process. In this process, the CN-C 170A acquires a session policy of the UE #1 from the UDR 131. Thereby, it is determined whether or not an Uplink PDU session can be established. Here, it is assumed that it is determined that the Uplink PDU session can be established.

Thereafter, a system procedure referred to as PFCP session establishment is executed. Thereby, an Uplink session rule is inserted into the U-Plane processing section 180A of the CU 161A.

In step S244, the CN-C 170A executes "Store UE #1 context" with use of a protocol specified by the context holding section 174A. Thereby, in step S181, the Session Management context (SM #1) of the UE #1 is held by the context holding section 174A.

In step S245, the CN-C 170A generates "PDU session establishment accept" as a return value in response to the function call in step S222, and in step S223, this is acquired by the CU 161A.

In step S224, the CU 161A transmits a PDU session establishment accept message to the UE 200, and in step S203, this is received by the UE 200.

In step S204, the UE 200 transmits First Uplink Data to the U-plane processing section 180A, and in step S291, this is received by the U-plane processing section 180A.

In step S225, the CU 161A calls a function for executing various processes related to the MM/SM processing section 172 and the C-plane processing section 173. Here, a function call (func.call) is executed by using AMF-UE-NGAP-ID #1 as an argument, and in step S246, for example, the CN-C 170A as an instance corresponding to the MM/SM processing section 172 and the C-plane processing section 173 is generated.

In step S273, the context holding section 174A executes "Load UE #1 context" with use of a specified protocol. Thereby, the context related to the UE #1 held by the context holding section 174A is read by the CN-C 170A.

In step S248, the CN-C 170A executes a handle PDU session resource setup request process. Thereby, it is determined whether or not a Downlink PDU session can be established. Here, it is assumed that it is determined that the Downlink PDU session can be established.

Thereafter, a system procedure referred to as PFCP session modification is executed. Thereby, a Downlink session rule is inserted into the U-Plane processing section 180A of the CU 161A.

In step S249, the CN-C 170A executes "Store UE #1 context" with use of a protocol specified by the context holding section 174A. Thereby, in step S274, the Session Management context of the UE #1 updated in accordance with the execution of PFCP session modification is held by the context holding section 174A.

In step S250, the CN-C 170A generates "PDU session resource setup response" as a return value in response to the function call in step S225, and in step S226, this is acquired by the CU 161A.

In step S292, the U-plane processing section 180A transmits First Downlink Data to the UE 200, and in step S205, this is received by the UE 200.

In the 5G mobile communication system in accordance with the present embodiment, PDU Session Establishment as a system procedure is executed in this way.

### (Sequence of handover)

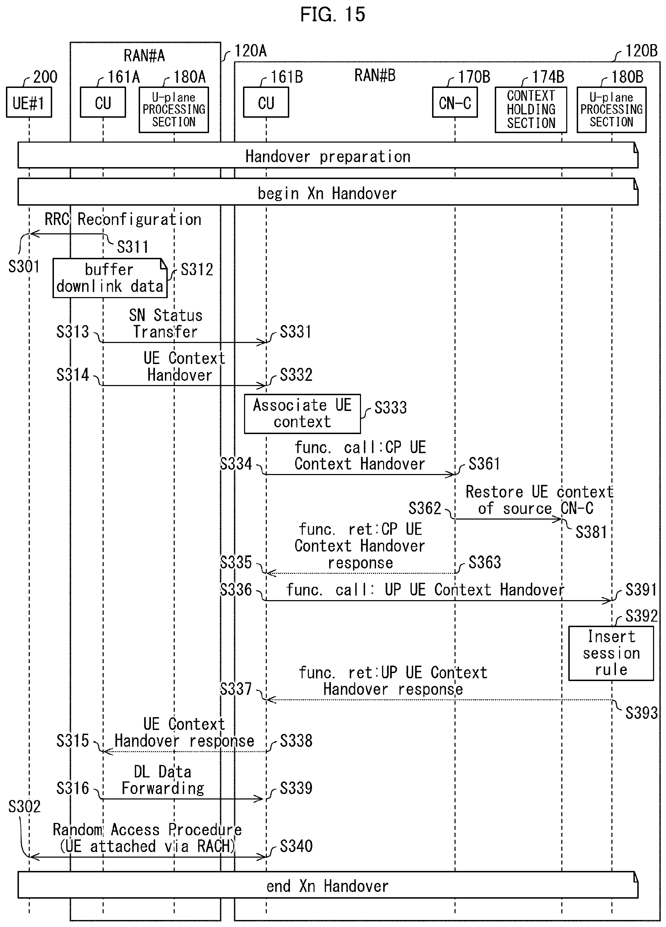

Next, a sequence of Xn Handover, which is a process related to switching of base stations executed in the 5G mobile communication system in accordance with the present embodiment, will be described. Fig. 15 is an arrow chart illustrating the sequence of Xn Handover.

In this arrow chart, the UE 200 (UE #1), the CU 161A, the U-Plane processing section 180A, the CU 161B, the CN-C 170B, the context holding section 174B, and the U-Plane processing section 180B are illustrated as entities that execute each step. The CU 161A and the U-Plane processing section 180A are included in the RAN 120A. The CU 161B, the CN-C 170B, the context holding section 174B, and the U-Plane processing section 180B are included in the RAN 120B.

The CN-C 170B is an entity corresponding to the MM/SM processing section 172 and the C-plane processing section 173 described above with reference to Fig. 3, and may be, for example, an instance generated by call of a predetermined function by the CU 161B. Further, the U-Plane processing section 180A and the U-Plane processing section 180B are entities corresponding to the U-Plane processing section 180 described above with reference to Fig. 3, and may be, for example, an instance generated by call of a predetermined function by the CU 161A and the CU 161B.

Note that actually, various messages transmitted from the UE 200 are acquired by the CU 161A via the DU 162A of the RAN 120A. Similarly, various messages transmitted from the CU 161A to the RAN 120A are transmitted via the DU 162A, actually. Here, description of the process carried out by the DU 162A is omitted to simplify the description.

When it is detected that the base station to which the UE 200 is connected has been switched from the RAN 120A to the RAN 120B, a system procedure referred to as Handover preparation is executed between the RAN 120A and the RAN 120B. Thereafter, Xn Handover is actually initiated ("begin Xn Handover").

In step S331, the CU 161A transmits an RRC Reconfiguration message to the UE 200, and in step S301, this is received by the UE 200.

In step S312, the CU 161A executes a buffer downlink data process. Thereby, data (Downlink data) transmitted from the DN with which the UE #1 is currently communicating, to the UE #1 is buffered.

In step S313, the CU 161A transmits a serial number (SN) to the RAN 120B (SN status Transfer in the drawing), and in step S331, this is received by the CU 161B of the RAN 120B.

In step S314, the CU 161A forwards the contexts of the UE #1 held in the context holding section 174A, i.e., the Session Management context and the Mobility Management context, to the CU 161B, and in step S331, this is acquired by the CU 161B. At this time, the forwarding of the contexts of the UE #1 may be carried out with use of the Xn interface, or may be carried out by another method. As an example, the forwarding of the contexts of the UE #1 may be carried out with use of gRPC (Remote Procedure Calls).

In step S333, the CU 161B executes an Associate UE context process. Thereby, the SN status received in step S331 and the contexts of the UE #1 acquired in step S332 are associated with each other.

In step S334, the CU 161B calls a function for executing various processes related to the MM/SM processing section 172 and the C-plane processing section 173. Here, a function call (func.call) is executed by using CP UE Context Handover as an argument, and in step S361, for example, the CN-C 170B as an instance corresponding to the MM/SM processing section 172 and the C-plane processing section 173 is generated.

In step S362, the CN-C 170B executes "Restore UE context of source CN-C" with use of a protocol specified by the context holding section 174B. Thereby, in step S381, the contexts of the UE #1 are held by the context holding section 174B.

In step S363, the CN-C 170B generates "CP UE Context Handover response" as a return value in response to the function call in step S334, and in step S335, this is acquired by the CU 161B.

In step S336, the CU 161B calls a function for executing various processes related to the MM/SM processing section 172 and the C-plane processing section 173. Here, a function call (func.call) is executed by using UP UE Context Handover as an argument, and in step S391, for example, the U-Plane processing section 180B as an instance is generated.

In step S392, the U-Plane processing section 180B executes an Insert session rule process. Thereby, a Downlink session rule is inserted into the U-Plane processing section 180B of the CU 161B.

In step S393, the U-Plane processing section 180B generates "UP UE Context Handover response" as a return value in response to the function call in step S336, and in step S337, this is acquired by the CU 161B.

In step S338, the CU 161B transmits a UE Context Handover response message to the RAN 120A, and in step S315, this is received by the CU 161A of the RAN 120A.

In step S316, the CU 161A transmits the Downlink data buffered by the process of step S312, to the RAN 120B, and in step S339, this is received by the CU 161B of the RAN 120B.

In step S302 and step S340, Random Access Procedure is executed by the UE 200 and the CU 161B of the RAN 120B.

Then, the Xn Handover is ended ("end Xn Handover").

In the 5G mobile communication system in accordance with the present embodiment, Xn Handover is executed in this way.

### (Effects of Embodiment 1)

As described above, according to the present embodiment, since the RAN 120 includes the U-plane processing section 180, the UE 200 can transmit and receive data to and from the DN without the intervening core network 110.

In the present embodiment, at the time of Registaration, it is not necessary to carry out communication between the RAN 120 and the core network 110 other than communication with the UDR 131 for acquisition of subscriber information and update of the subscriber information. Further, a process related to PDU Session Establishment does not require communication between the RAN 120 and the core network 110 other than the communication with the UDR 131 for acquiring a session policy.

For this reason, according to the present embodiment, even in a case where communication between the RAN and the core network is disconnected due to a failure in the transport network, the UE for which Registaraion has already been completed can continue to receive the provided application service. Therefore, for example, advantages of MEC can be fully utilized.

Furthermore, according to the present embodiment, all processes related to the Xn handover are also executed by the RAN 120. For this reason, according to the present embodiment, even in a case where communication between the RAN and the core network is disconnected due to a failure in the transport network, the UE can be moved freely.

Further, in the present embodiment, as described above, it is not necessary to carry out communication by the N2 interface, that is, communication between the RAN 120 and the AMF of the core network 110. For this reason, for example, when many UEs resume communication all at once due to occurrence of a failure in the transport network, it is possible to avoid an increase in processing load on the core network due to concentration of communication of the N2 interface on the AMF of the core network. That is, it is possible to inhibit the conventional problem of occurrence of congestion due to the increase in processing load on the core network due to occurrence of the failure in the transport network.

As described above, according to the present embodiment, it is possible to achieve a technology that makes it possible to provide a communication service highly resistant to a failure in a transport network.

### <Embodiment 2>

As described above, in the RAN 120, processes that are conventionally executed by the network functions included in the core network of a 5G mobile communication system, such as the AMF, the SMF, and the UPF can be executed by the CU 161. For this reason, functions can be flexibly assigned to the base station device and the core network.

That is, in Embodiment 1 described above, only the UDR 131 among the network functions of the core network 110 is configured to be called from the RAN 120 via the SBI 171, but other network functions may be also configured to be called from the RAN 120 via the SBI 171.

For example, among the network functions of the core network 110, the unified data management (UDM) may be called from the RAN 120 via the SBI 171 in addition to the UDR 131. Further, for example, all processes executed by the network functions of the core network other than the UDR can be executed by the CU 161.

Alternatively, for example, a network function that processes highly confidential information, such as personal information of a user, may be disposed in the core network 110 and called from the RAN 120 via the SBI 171, and processes related to other network functions may be executed by the CU 161.

Alternatively, the UPF may be provided separately from the RAN 120. For example, a server or the like used as UPF may be disposed in a station building where the RAN 120 is disposed, and the RAN 120 and the UPF may be connected by a LAN or the like. In this case, the U-Plane processing section 180 may not be included in the CU 161 of the RAN 120.

### <Software Implementation Example>

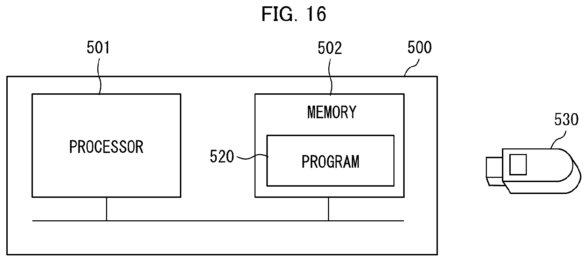

The base station device 120 described above can be realized by a program for causing a computer to function, the program causing the computer to function as the base station device 120. In this case, the base station device 120 includes, as hardware for executing the program, a computer which includes (i) at least one control device (e.g., processor) and (ii) at least one storage device (e.g., memory). An example of such a computer is illustrated in Fig. 16.

A computer 500 includes at least one processor 501 and at least one memory 502. In the memory 502, a program 520 for causing the computer 500 to function as the base station device 120 is stored. In the computer 500, the processor 501 reads the program 520 from the memory 502 and executes the program 520, so that the functions of the base station device 120 are realized.

The processor 501 can be, for example, a Central Processing Unit (CPU), a Graphic Processing Unit (GPU), a Digital Signal Processor (DSP), a Micro Processing Unit (MPU), a Floating point number Processing Unit (FPU), a Physics Processing Unit (PPU), a microcontroller, or a combination of any of them.

The memory 502 can be, for example, a flash memory, a Hard Disk Drive (HDD), a Solid State Drive (SSD), or a combination of any of them.

Note that the computer 500 can further include a Random Access Memory (RAM) in which the program 520 is loaded when the program 520 is executed and in which various kinds of data are temporarily stored. The computer 500 can further include a communication interface for carrying out transmission and reception of data with other apparatuses. The computer 500 can further include an input-output interface for connecting input-output apparatuses such as a keyboard, a mouse, a display, and/or a printer.

The program 520 for causing the computer 500 to operate as the base station device 120 can be stored in a non-transitory tangible storage medium 530 which is readable by the computer 500. The storage medium 530 can be, for example, a tape, a disk, a card, a semiconductor memory, a programmable logic circuit, or the like. The computer 500 can obtain the program 520 via the storage medium 530.

The program 520 for causing the computer 500 to operate as the base station device 120 can be transmitted via a transmission medium. The transmission medium can be, for example, a communications network, a broadcast wave, or the like. The computer 500 can obtain the program 520 also via such a transmission medium.

A part of or all of the functions of the base station device 120 can also be realized by a logic circuit. For example, an integrated circuit on which a logic circuit functioning as the control blocks is formed may also be encompassed in the present disclosure. Further, the functions of the control blocks can also be realized by a quantum computer, for example.

Furthermore, in each of the above-described embodiments, an example in which the present disclosure is applied to a 5G communication system has been described, but the present disclosure can be similarly applied to a communication system of 6G or later, provided that the communication system can be configured in units of NF.

Further, since the above-described aspects of the present disclosure give the foregoing effects, it is possible to contribute to achievement of Goal 9 "Build resilient infrastructure, promote inclusive and sustainable industrialization and foster innovation." of Sustainable Development Goals (SDGs).

The present disclosure is not limited to the embodiments, but can be altered by a skilled person in the art within the scope of the claims. The present disclosure also encompasses, in its technical scope, any embodiment derived by combining technical means disclosed in differing embodiments.

Aspects of the present invention can also be expressed as follows:
A base station device in accordance with Aspect 1 of the present disclosure is a base station device in a mobile communication network, the base station device including: a context holding section configured to store a mobility management (MM) context and a session management (SM) context for each of terminals connected to the base station device; and a context forwarding section configured to forward, in a case where a handover of a terminal is detected, the MM context and the SM context of the terminal to a base station device serving as a Target of the handover.

A base station device in accordance with Aspect 2 of the present disclosure is configured, in Aspect 1 above, so that when initiation of a system procedure is requested from the terminal, a central unit (CU) of the base station device executes a process corresponding to a process executed by a network function of a core network, by calling a function for causing a computer to execute a process required in the system procedure.

A base station device in accordance with Aspect 3 of the present disclosure is configured, in Aspect 2 above, so that the CU of the base station device executes a process corresponding to a process executed by a user plane function (UPF) which is a network function of the core network, and the base station device is connected to a connection interface with a data netwaork (DN).

A base station device in accordance with Aspect 4 of the present disclosure is configured, in Aspect 2 or 3 above, so that the base station device is connected to the core network via a transport network, the base station device has a service based interface (SBI) in the CU, and in a case where the base station device receives a Registration Request message from the terminal, the base station device receives, via the SBI, a service provided from a user data repository (UDR) of the core network, and the context holding section stores the MM context of the terminal.

A base station device in accordance with Aspect 5 of the present disclosure is configured, in Aspect 4 above, so that in a case where the base station device receives a PDU session establishment request message from the terminal, the base station device receives, via the SBI, a service provided from the UDR of the core network, and the context holding section stores the SM context of the terminal.

A base station device in accordance with Aspect 6 of the present disclosure is configured, in any one of Aspects 1 to 4 above, so that the handover is Xn handover.

A base station device in accordance with Aspect 7 of the present disclosure is configured, in Aspect 6 above, so that the context forwarding section forwards the MM context and the SM context of the terminal to the base station device serving as the Target of the handover with use of gRPC.

A base station device switching method in accordance with Aspect 8 of the present disclosure is a base station device switching method in a mobile communication network, the base station device switching method including: storing a mobility management (MM) context and a session management (SM) context for each of terminals connected to a base station device; and forwarding, in a case where a handover of a terminal is detected, the MM context and the SM context of the terminal to a base station device serving as a Target of the handover.

A program in accordance with Aspect 9 of the present disclosure is a program for causing a computer to function as a base station device in a mobile communication network, the base station device including: a context holding section configured to store a mobility management (MM) context and a session management (SM) context for each of terminals connected to the base station device; and a context forwarding section configured to forward, in a case where a handover of a terminal is detected, the MM context and the SM context of the terminal to a base station device serving as a Target of the handover.

### Reference Signs List

- 110: Core network
- 120: Base station device
- 131: UDR
- 161: CU
- 162: DU
- 163: RU
- 170: CN-C
- 171: SBI
- 172: MM/SM processing section
- 173: C-Plane processing section
- 174: Context holding section
- 175: SCTP processing section
- 180: U-Plane processing section
- 181: Session Anchor
- 182: Mobility Anchor
- 183: Packet Forward
- 184: Access Control

## Claims

1. A base station device in a mobile communication network, the base station device comprising:
a context holding section configured to store a mobility management (MM) context and a session management (SM) context for each of terminals connected to the base station device; and
a context forwarding section configured to forward, in a case where a handover of a terminal is detected, the MM context and the SM context of the terminal to a base station device serving as a Target of the handover.

2. The base station device according to claim 1, wherein when initiation of a system procedure is requested from the terminal, a central unit (CU) of the base station device executes a process corresponding to a process executed by a network function of a core network, by calling a function for causing a computer to execute a process required in the system procedure.

3. The base station device according to claim 2, wherein
the CU of the base station device executes a process corresponding to a process executed by a user plane function (UPF) which is a network function of the core network, and
the base station device is connected to a connection interface with a data netwaork (DN).

4. The base station device according to claim 2 or 3, wherein
the base station device is connected to the core network via a transport network,
the base station device has a service based interface (SBI) in the CU, and
in a case where the base station device receives a Registration Request message from the terminal, the base station device receives, via the SBI, a service provided from a user data repository (UDR) of the core network, and the context holding section stores the MM context of the terminal.

5. The base station device according to claim 4, wherein in a case where the base station device receives a PDU session establishment request message from the terminal, the base station device receives, via the SBI, a service provided from the UDR of the core network, and the context holding section stores the SM context of the terminal.

6. The base station device according to any one of claims 1 to 4, wherein the handover is Xn handover.

7. The base station device according to claim 6, wherein the context forwarding section forwards the MM context and the SM context of the terminal to the base station device serving as the Target of the handover with use of gRPC.

8. A base station device switching method in a mobile communication network, the base station device switching method comprising:
storing a mobility management (MM) context and a session management (SM) context for each of terminals connected to a base station device; and
forwarding, in a case where a handover of a terminal is detected, the MM context and the SM context of the terminal to a base station device serving as a Target of the handover.

9. A program for causing a computer to function as a base station device in a mobile communication network,
the base station device comprising:
a context holding section configured to store a mobility management (MM) context and a session management (SM) context for each of terminals connected to the base station device; and
a context forwarding section configured to forward, in a case where a handover of a terminal is detected, the MM context and the SM context of the terminal to a base station device serving as a Target of the handover.
